# EUROPÄISCHE PATENTSCHRIFT

(11) **EP 3 450 235 B1**
(45) Veröffentlichungstag und Bekanntmachung des Hinweises auf die Patenterteilung: **02.08.2023**
(21) Anmeldenummer: 18174580.3
(22) Anmeldetag: 28.05.2018
(51) Int. Cl.: B60K 6/30, B60K 6/40, B60K 6/387, A01D 69/02, B60L 50/30

(54) **LANDWIRTSCHAFTLICHE ARBEITSMASCHINE SOWIE ELEKTRISCHES SYSTEM FÜR EINE SOLCHE**
AGRICULTURAL WORKING MACHINE AND ELECTRICAL SYSTEM FOR SAME
ENGIN AGRICOLE AINSI QUE SYSTÈME ÉLECTRIQUE POUR UN TEL ENGIN AGRICOLE

(30) Priorität: 04.09.2017 DE 102017120294
(43) Veröffentlichungstag der Anmeldung: 06.03.2019
(73) Patentinhaber: CLAAS Industrietechnik GmbH, 33106 Paderborn (DE)
(72) Erfinder: Verhorst, Jan-Willem, 59555 Lippstadt (DE); Knoop, Patrick, 33154 Salzkotten (DE); Heymann, Philipp, 59519 Möhnesee Wamel (DE)
(74) Vertreter: CLAAS Gruppe

(56) Entgegenhaltungen:
- EP-A1- 1 563 724
- EP-B1- 1 563 724
- WO-A2-2007/138353
- DE-A1-102007 033 575
- GB-A- 2 078 016

## Beschreibung

Die vorliegende Anmeldung betrifft eine landwirtschaftliche Arbeitsmaschine, beispielsweise einen Mähdrescher, einen Feldhäcksler oder einen Traktor. Die Arbeitsmaschine umfasst ein elektrisches System zur Erzeugung von elektrischer Energie, mittels derer interne sowie externe elektrische Verbraucher mit elektrischem Strom versorgbar sind.

Weiterhin betrifft die vorliegende Anmeldung ein elektrisches System für eine landwirtschaftliche Arbeitsmaschine. Dieses umfasst eine elektrische Maschine und einen dieser zugeordneten Energiespeicher. Die elektrische Maschine kann insbesondere als Generator und/oder als Elektromotor wirken.

Landwirtschaftliche Arbeitsmaschinen der genannten Art sind im Stand der Technik bereits bekannt. Hierzu wird insbesondere auf die Europäische Patentschrift EP 1 563 724 B1 verwiesen. Diese beschreibt einen Feldhäcksler, der mit einem elektrischen System ausgestattet ist. Letzteres umfasst eine elektrische Maschine, die an eine verbraucherseitige Abtriebswelle der Getriebeeinrichtung angeschlossen ist. Diese Abtriebswelle kann beispielsweise dazu vorgesehen sein, das Häckselorgan des Feldhäckslers anzutreiben.

Die Getriebeeinrichtung, die als Differentialgetriebe ausgebildet ist, ist mittels einer kraftmaschinenseitigen Abtriebswelle (Kurbelwelle) mit einer zugeordneten Verbrennungskraftmaschine verbunden. Ein auf die Getriebeeinrichtung übertragenes Drehmoment wird auf die verbraucherseitige Abtriebswelle übertragen, auf der die elektrische Maschine angeordnet ist. Ein Überschuss an Leistung, die das Häckselorgan nicht abruft, kann mittels der elektrischen Maschine in Funktion als Generator in einem der elektrischen Maschine zugeordneten Energiespeicher gespeichert werden. Dieser kann z.B. in Form einer Batterie vorliegen. Insbesondere kann mittels der elektrischen Maschine in ihrer Funktion als Generator das Häckselorgan abgebremst werden, sobald dessen Benutzung eingestellt wird. Hierdurch wird zum einen das Häckselorgan wunschgemäß zügig gebremst und zum anderen die in der Rotation des Häckselorgans liegende Energie nutzbar gemacht. Die so gespeicherte Energie kann beispielsweise dazu verwendet werden, im Betriebszustand es Häckselorgans Leistungsspitzen abzudecken, indem die elektrische Maschine in Funktion als Elektromotor zugeschaltet wird und ein zusätzliches Drehmoment auf die verbraucherseitige Abtriebswelle ausübt.

Die GB 2 078 016 A betrifft ein elektrisches System zur Erzeugung von elektrischer Energie. Die DE 10 2007 033 575 A betrifft ein Fahrzeug mit einer Verbrennungskraftmaschine und einem elektrischen System.

Die bekannten landwirtschaftlichen Arbeitsmaschinen weisen grundsätzlich das Problem auf, dass stark unterschiedliche elektrische Leistungen benötigt werden, um beispielsweise verschiedene Vorsatzgeräte anzutreiben. Die Leistungsaufnahme der internen Verbraucher ist demgegenüber leicht und genau berechenbar, sodass ein elektrisches System einer Arbeitsmaschine hierauf gut abgestimmt werden kann. Die mitunter erheblich schwankenden elektrischen Leistungen etwaiger Vorsatzgeräte verlangen hingegen typischerweise nach einer besonders leistungsfähigen Auslegung des elektrischen Systems, was wiederum zur Folge hat, dass dieses für die allermeisten Anwendungen gar nicht ausgenutzt und überdimensioniert ist. Abgesehen von den höheren Investitionskosten für ein sehr leistungsfähig ausgelegtes elektrisches System ist zudem bei einer lediglich teilweisen Nutzung der insgesamt zur Verfügung stellbaren elektrischen Leistung auch dessen Wirkungsgrad vergleichsweise schlecht.

Der vorliegenden Anmeldung liegt mithin die Aufgabe zugrunde, eine landwirtschaftliche Arbeitsmaschine sowie ein elektrisches System für eine solche zur Verfügung zu stellen, die die bekannten Probleme nach Möglichkeit vermeiden.

Die zugrunde liegende Aufgabe wird mittels einer landwirtschaftlichen Arbeitsmaschine mit den Merkmalen des Anspruchs 3 gelöst. Vorteilhafte Ausgestaltungen sind den Ansprüchen 4 bis 11 entnehmbar.

Unter einer "Getriebeeinrichtung" kann im Sinne der vorliegenden Anmeldung insbesondere ein Differentialgetriebe oder eine Pumpenverteilergetriebe verstanden werden, wobei mittels der Getriebeeinrichtung Verbraucher der Arbeitsmaschine mit Energie versorgt werden, insbesondere mechanisch mittels Wellen oder hydraulisch mittels Pumpen.

Unter einer "elektrischen Maschine" wird im Sinne der vorliegenden Anmeldung grundsätzlich jede Maschine verstanden, die dazu geeignet ist, mechanische Energie in elektrische Energie und/oder umgekehrt umzuwandeln. Insbesondere kann die elektrische Maschine von einer Synchronmaschine gebildet sein, die grundsätzlich sowohl als Generator als auch als Elektromotor betreibbar ist.

Unter einem "Energiespeicher" kann im Sinne der vorliegenden Anmeldung grundsätzlich jede Art von Speicher verstanden werden, der dazu geeignet ist, Energie zu speichern. Dies kann insbesondere das Speichern von elektrischer Energie oder mechanischer Energie beinhalten. In Verbindung mit der erfindungsgemäßen Arbeitsmaschine ist insbesondere ein mechanischer Energiespeicher in Form eines Schwungmassenspeichers vorteilhaft, der mindestens ein Schwungmassenrad aufweist. Dies wird nachstehend gesondert ausgeführt.

Analog zu dem Energiespeicher kann ein "Kupplungsmittel" im Sinne der vorliegenden Anmeldung grundsätzlich jede Art von Kupplung sein, die einen Energieaustausch zwischen dem Energiespeicher und der elektrischen Maschine ermöglicht. Mithin sind sowohl mechanische Kupplungen, z.B. Lamellenkupplungen, als auch elektrische Kupplungen denkbar, die einen Fluss von elektrischem Strom zwischen dem Energiespeicher und dem elektrischen Antrieb ermöglichen.

Die erfindungsgemäße Arbeitsmaschine hat viele Vorteile. Ihr liegt die erfinderische Idee zugrunde, die Versorgungslage seitens der Arbeitsmaschine an die jeweils notwendige Beanspruchung durch ein etwaiges Vorsatzgerät anpassen zu können. Dies wird mittels der erfindungsgemäßen Arbeitsmaschine dadurch erreicht, dass wahlweise lediglich eine oder zwei elektrische Maschinen nutzbar sind. In einem Betriebszustand, in dem ein jeweiliges Vorsatzgerät eine vergleichsweise geringe elektrische Leistung abruft oder sogar gar kein Vorsatzgerät betrieben wird, genügt es dann, lediglich die erste elektrische Maschine als Generator zu betreiben. Die mittels der ersten elektrischen Maschine erzeugte elektrische Leistung reicht dann aus, um den anliegenden elektrischen Verbrauch zu decken. Die zweite elektrische Maschine kann in diesem Betriebszustand zumindest in ihrer Funktion als Generator ungenutzt bleiben. Die vergleichsweise hohe Auslastung der elektrischen Leistungsfähigkeit der ersten elektrischen Maschine wirkt sich dabei positiv auf den Wirkungsgrad des elektrischen Systems insgesamt aus.

Mittels Hinzuschaltung der zweiten elektrischen Maschine kann die elektrische Leistung des elektrischen Systems erheblich vergrößert, insbesondere verdoppelt, werden. Selbst solche Vorsatzgeräte, die mit hoch leistungsfähigen elektrischen Verbrauchern ausgestattet sind, können sodann ohne Weiteres versorgt werden. Hierzu ist lediglich die erste elektrische Maschine mittels des Kupplungsmittels mit der zweiten elektrischen Maschine zu verbinden.

Zudem ist zumindest die erste elektrische Maschine zumindest mittelbar mit dem Energiespeicher verbindbar, sodass überschüssige Energie der als Generator betriebenen ersten elektrischen Maschine speicherbar ist. Die mittelbare Verbindung kann insbesondere über Umweg über die zweite elektrische Maschine erfolgen, die unmittelbar mit dem Energiespeicher verbindbar oder verbunden ist. Die mittels der ersten elektrischen Maschine erzeugte elektrische Energie wird dann dazu verwendet, die zweite elektrische Maschine in ihrer Funktion als Elektromotor anzutreiben, wobei letzterer wiederum mit dem Energiespeicher zusammenwirkt. Auf diesem Weg kann die überschüssige Energie der ersten elektrischen Maschine mittelbar in den Energiespeicher eingespeist werden.

Überschüssige elektrische Energie kann beispielsweise anfallen, während die landwirtschaftliche Arbeitsmaschine ohne jegliches Vorsatzgerät betrieben wird. Mittels der Speicherung der überschüssigen Energie kann das elektrische System später umgekehrt zum Generatorbetrieb der ersten elektrischen Maschine selbige in einem Hybridbetrieb der Arbeitsmaschine als Elektromotor verwenden. In dieser Funktion kann die erste elektrische Maschine ihrerseits ein Drehmoment in den Antriebsstrang der Arbeitsmaschine einspeisen und auf diese Weise beispielsweise einen Boost für die Verbrennungskraftmaschine bereitstellen oder zur Phlegmatisierung derselben genutzt werden.

Wie vorstehend bereits angedeutet, ist es besonders vorteilhaft, den Energiespeicher in Form eines Schwungmassenspeichers auszuführen. Dieser kann insbesondere mittels eines weiteren Kupplungsmittels mit der zweiten elektrischen Maschine verbindbar oder verbunden sein. Dies hat den besonderen Vorteil, dass in einem Betrieb der Arbeitsmaschine mit geringer erforderlicher elektrischer Leistung etwaige überschüssige Energie, die die erste elektrische Maschine in ihrer Funktion als Generator erzeugt, in den Schwungmassenspeicher überleitbar ist. Insbesondere kann die überschüssige elektrische Energie benutzt werden, um die zweite elektrische Maschine als Elektromotor zu betreiben, um wiederum - über das zweite Kopplungsmittel - schließlich den Energiespeicher in Form des Schwungmassenspeichers gewissermaßen "aufzuladen", das heißt das Schwungmassenrad des Schwungmassenspeichers zu beschleunigen. In diesem Betriebszustand ist das erste Kupplungsmittel, mittels dessen die erste elektrische Maschine und die zweite elektrische Maschine miteinander verbunden sind, geöffnet, sodass die erste und die zweite elektrische Maschine mit voneinander unabhängigen Drehzahlen rotieren können.

Vorteilhafterweise sind die beiden elektrischen Maschinen und der Energiespeicher derart in Reihe geschaltet, dass die beiden elektrischen Maschinen mittels des ersten Kupplungsmittels und die zweite elektrische Maschine und der Energiespeicher mittels des zweiten Kupplungsmittels miteinander verbunden oder verbindbar sind. Die erste elektrische Maschine kann insbesondere dauerhaft drehfest mit einer jeweiligen Abtriebswelle des Antriebsstrangs der landwirtschaftlichen Arbeitsmaschine zusammenwirken.

Weiterhin kann eine solche Ausgestaltung der erfindungsgemäßen Arbeitsmaschine vorteilhaft sein, bei der das elektrische System mindestens eine Übersetzungsstufe umfasst, die zwischen die beiden elektrischen Maschinen geschaltet ist, wobei mittels der Übersetzungsstufe eine Drehzahl der ersten elektrischen Maschine auf eine demgegenüber erhöhte Drehzahl der zweiten elektrischen Maschine übersetzbar ist. Ein solches Übersetzungsverhältnis kann beispielsweise n = 3 betragen. Weiterhin ist es denkbar, dass das elektrische System eine weitere Übersetzungsstufe beinhaltet, die eine Drehzahl der zweiten elektrischen Maschine auf eine demgegenüber erhöhte Drehzahl des Schwungmassenrades des als Schwungmassenspeicher ausgebildeten Energiespeichers übersetzt. Der Übersetzung liegt der Gedanken zugrunde, dass die Drehzahl der ersten elektrischen Maschine, die typischerweise unmittelbar von der Drehzahl der kraftmaschinenseitigen Abtriebswelle abhängt, in der Regel vergleichsweise niedrig ist, beispielsweise in einem Bereich von 2000 U/min liegt. Ein Schwungmassenspeicher kann jedoch in diesem Drehzahlbereich normalerweise nicht besonders effizient arbeiten, das heißt lediglich wenig Rotationsenergie speichern. Daher besteht das Interesse, das Schwungmassenrad des Schwungmassenspeichers möglichst auf eine höhere Drehzahl zu beschleunigen. Entsprechend kann es sinnvoll sein, eine Drehzahl der zweiten elektrischen Maschine unter einem Übersetzungsverhältnis auf das Schwungmassenrad zu übertragen.

Alternativ oder zusätzlich ist es denkbar, zumindest die zweite elektrische Maschine in Form einer Asynchronmaschine, insbesondere einer polumschaltbaren Asynchronmaschine, auszugestalten. Die Polumschaltbarkeit einer solchen Asynchronmaschine bietet den besonderen Vorteil, dass diese mittels der Polumschaltung in unterschiedlichen Drehzahlbereichen mit gutem Wirkungsgrad und hoher Leistung betrieben werden kann. Auf diese Weise kann die zweite elektrische Maschine sowohl in Funktion als Generator in Koppelung mit der ersten elektrischen Maschine als auch in Funktion als Elektromotor zur Speisung des Energiespeichers besonders effizient genutzt werden.

In einer weiterhin vorteilhaften Ausgestaltung der erfindungsgemäßen Arbeitsmaschine ist die erste elektrische Maschine unmittelbar mit der kraftmaschinenseitigen Abtriebswelle der Verbrennungskraftmaschine verbunden, wobei vorzugsweise die elektrische Maschine dauerhaft fest in Drehmoment übertragender Weise mit der Abtriebswelle zusammenwirkt. Die Anordnung der ersten elektrischen Maschine an der kraftmaschinenseitigen Abtriebswelle (Kurbelwelle) ist besonders effizient, da etwaige Verluste einer ansonsten zwischengeschalteten Getriebeeinrichtung vermieden werden.

Alternativ kann die erste elektrische Maschine mit der verbraucherseitigen Abtriebswelle der Getriebeeinrichtung zusammenwirken. Dabei ist es insbesondere denkbar, der elektrischen Maschine eine gesonderte Abtriebswelle der Getriebeeinrichtung zuzuordnen, die mittels einer jeweils gewünschten Übersetzung besonders leicht in einen bestimmten Drehzahlbereich bringbar ist.

Weiterhin wird die zugrunde liegende Aufgabe mittels eines elektrischen Systems gemäß Anspruch 1 gelöst. Vorteilhafte Ausgestaltungen ergeben sich aus dem Unteranspruch 2.

Das erfindungsgemäße elektrische System ist besonders vorteilhaft für die vorstehend beschriebene erfindungsgemäße landwirtschaftliche Arbeitsmaschine verwendbar. Die sich im Zuge der Verwendung des elektrischen Systems ergebenden Vorteile ergeben sich bereits aus vorstehender Erläuterung. Insbesondere befähigt das elektrische System dazu, die erzeugte elektrische Leistung stufenlos mittels der beiden zusammenschaltbaren elektrischen Maschinen an den jeweiligen Bedarf anzupassen und zudem Hybridfunktionen zu realisieren, sofern dem System keine elektrische Leistung abverlangt ist. Die gleichwohl produzierte elektrische Energie kann mittels der zweiten elektrischen Maschine in einen Energiespeicher eingespeist werden, der vorzugsweise von einem Schwungmassenenergiespeicher gebildet ist.

Erfindungsgemäß sind die erste elektrische Maschine, die zweite elektrische Maschine und der Energiespeicher in Reihe geschaltet, wobei die beiden elektrischen Maschinen mittels eines ersten Kupplungsmittels und die zweite elektrische Maschine und der Energiespeicher mittels eines zweiten Kupplungsmittels miteinander koppelbar sind. Mittels einer solchen Konstellation ist es besonders einfach, zwischen den verschiedenen Verwendungsmodi des elektrischen Systems, nämlich zur Bereitstellung von elektrischer Energie zum einen und zur Bereitstellung von Hybridfunktionen für die Verbrennungskraftmaschine zum anderen, zu wechseln.

Unter einem "Arbeitsbetrieb" der landwirtschaftlichen Arbeitsmaschine wird im Sinne der vorliegenden Anmeldung ein Betriebsmodus verstanden, in dem die landwirtschaftliche Arbeitsmaschine mit einem externen elektrischen Verbraucher, insbesondere einem Vorsatzgerät, zusammenwirkt, dessen elektrische Leistung derart groß ist, dass sie die Nutzung beider elektrischer Maschinen in ihrer Funktion als Generator erfordert, um die elektrische Leistung zur Verfügung stellen zu können. Folglich werden im Arbeitsbetrieb beide elektrische Maschinen jeweils als Generator verwendet.

Demgegenüber bezeichnet der "Hybridbetrieb" im Sinne der vorliegenden Anmeldung einen Betriebsmodus, in dem zumindest zeitweise gespeicherte Energie, insbesondere in Form von in dem als Schwungmassenspeicher ausgebildeten Energiespeicher gespeicherter Rotationsenergie, dazu genutzt wird, die erste elektrische Maschine in ihrer Funktion als Elektromotor zu verwenden und auf diese Weise ein Drehmoment auf die jeweilige Welle zu übertragen, mit der die erste elektrische Maschine zusammenwirkt. Hierbei kann es sich gemäß vorstehender Erläuterung beispielsweise um eine kraftmaschinenseitige Abtriebswelle (Kurbelwelle), eine verbraucherseitige Abtriebswelle oder eine Getriebewelle handeln. Weiterhin wird in dem Hybridbetrieb zumindest zeitweise überschüssige, mittels der ersten elektrischen Maschine in ihrer Funktion als Generator erzeugte elektrische Energie zum Betrieb der zweiten elektrischen Maschine in ihrer Funktion als Elektromotor verwendet, um den Energiespeicher zu laden, das heißt insbesondere ein Schwungmassenrad des Energiespeichers zu beschleunigen. In beiden Untermodi des Hybridbetriebs werden demzufolge die beiden elektrischen Maschinen wechselseitig als Generator und Elektromotor betrieben, jedoch nicht gleichzeitig als Generator oder Elektromotor. Ein Umschalten zwischen den Untermodi findet innerhalb des Hybridbetriebs typischerweise fortwährend und mitunter in hoher Frequenz statt.

Die erfindungsgemäße landwirtschaftliche Arbeitsmaschine und das erfindungsgemäße elektrische System werden nachstehend anhand von Ausführungsbeispielen, die in den Figuren dargestellt sind, näher erläutert. Es zeigt:
- Fig. 1:: Einen Querschnitt durch eine erfindungsgemäße landwirtschaftliche Arbeitsmaschine,
- Fig. 2:: Eine prinzipielle Darstellung eines Ausschnitts eines Antriebsstrangs der Arbeitsmaschine gemäß Figur 1 unter Verwendung eines erfindungsgemäßen elektrischen Systems,
- Fig. 3:: Eine prinzipielle Darstellung eines ersten erfindungsgemäßen elektrischen Systems,
- Fig. 4:: Eine prinzipielle Darstellung eines zweiten erfindungsgemäßen elektrischen Systems,
- Fig. 5:: Eine prinzipielle Darstellung eines dritten erfindungsgemäßen elektrischen Systems und
- Fig. 6:: Eine prinzipielle Darstellung eines vierten erfindungsgemäßen elektrischen Systems.

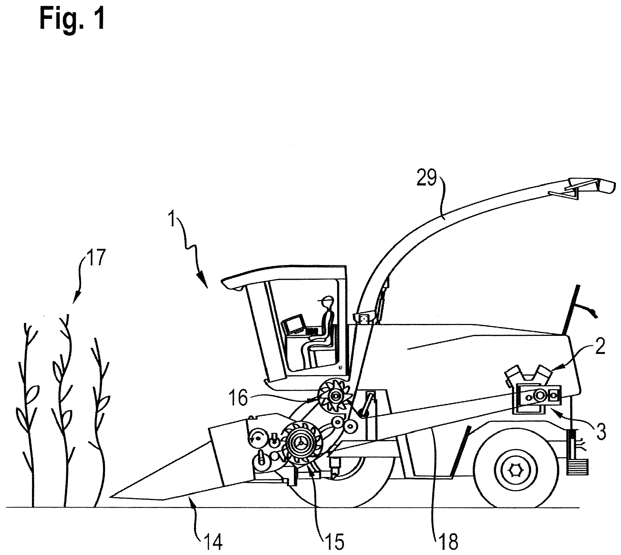

Ein erstes Ausführungsbeispiel, dass in den **Figuren 1 bis 3** gezeigt ist, umfasst eine landwirtschaftliche Arbeitsmaschine **1** in Form eines Feldhäckslers. Dieser wird dazu verwendet, Erntegut **17** zu schneiden, mittels eines Häckselorgans **15** zu häckseln und dann das gehäckselte Erntegut an einen nicht dargestellten Transportwagen zu übergeben. Hierzu wird das gehäckselte Erntegut insbesondere mittels eines Beschleunigungsorgans **16** beschleunigt und einem Auswurforgan **29** zugeführt.

Die Arbeitsmaschine **1** ist in dem gezeigten Beispiel mit externen Verbraucher **14** ausgerüstet. Der externe Verbraucher ist hier von einem Vorsatzgerät in Form eines Maisgebisses gebildet, mittels dessen das Erntegut **17** schneidbar ist. Der externe Verbraucher **14** weist einen hohen elektrischen Leistungsbedarf auf, der zumindest mittelbar mittels einer Verbrennungskraftmaschine **2** der Arbeitsmaschine **1** zur Verfügung gestellt werden muss.

Die Verbrennungskraftmaschine **2** wirkt hier mit einer Getriebeeinrichtung **3** zusammen, die die Leistung der Verbrennungskraftmaschine **2** an die einzelnen Verbraucher verteilt. Insbesondere sind das genannte Häckselorgan **15** sowie das Beschleunigungsorgan **16** mittels eines Riemens **18** mit der Getriebeeinrichtung **3** verbunden und werden über diese mechanisch angetrieben. Weiterhin dient die Getriebeeinrichtung **3** der Übertragung von Antriebskräften auf Räder **23** der Arbeitsmaschine **1**, sodass ein Vortrieb der Arbeitsmaschine **1** möglich ist.

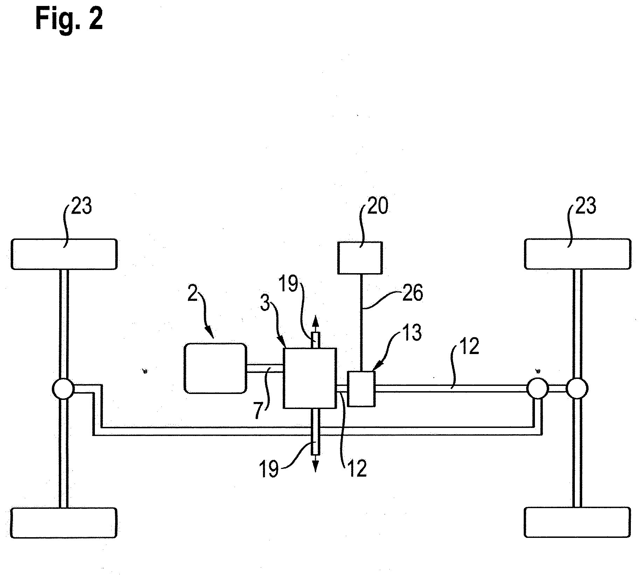

Ein Antriebsstrang der erfindungsgemäßen Arbeitsmaschine **1** ist in einer vereinfachten Prinzipdarstellung in **Figur 2** erkennbar. Die Verbrennungskraftmaschine **2** ist mittels einer kraftmaschinenseitigen Abtriebswelle **7** mit der Getriebeeinrichtung **3** gekoppelt. Die Abtriebswelle **7** entspricht hier der Kurbelwelle der Verbrennungskraftmaschine **2**. Die Getriebeeinrichtung **3** ist als Differentialgetriebe ausgebildet, das eine Übersetzung des Drehmoments der kraftmaschinenseitigen Abtriebswelle **7** auf eine Mehrzahl von verbraucherseitigen Abtriebswellen **12**, **19** vornimmt. Die Abtriebswellen **19** können beispielsweise zum Betrieb von Organen der Arbeitsmaschine verwendet werden. Die verbraucherseitige Abtriebswelle **12** überträgt ein Vortriebsdrehmoment, das auf die Räder **23** der Arbeitsmaschine **1** übertragen wird. Auf der Abtriebswelle **13** ist ein erfindungsgemäßes elektrisches System **13** angeordnet. Dieses wirkt mittels einer elektrischen Leitung **26** mit einer Regelung **20** zusammen, deren Funktion nachstehend genauer erläutert wird.

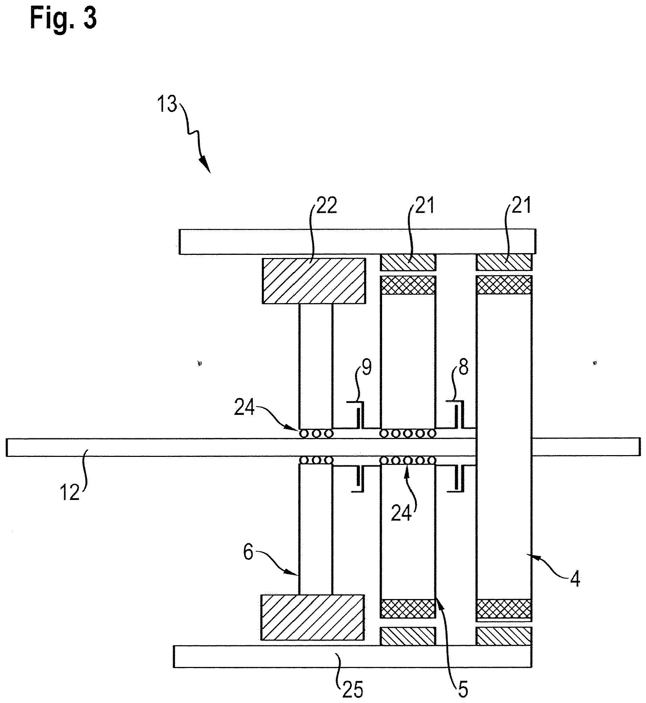

Das elektrische System **13**, das sich besonders gut anhand der Darstellung gemäß **Figur 3** ergibt, umfasst zwei elektrische Maschinen **4**, **5** sowie einen Energiespeicher **6**. Letzterer ist hier in Form eines Schwungmassenspeichers ausgebildet, der ein Schwungmassenrad umfasst. Dieses umfasst radial außenliegende Massen **22**, sodass das Schwungmassenrad besonders gut geeignet ist, Rotationsenergie zu speichern. Die elektrischen Maschinen **4**, **5** umfassen jeweils einen Rotor, wobei die Rotoren um eine gemeinsame Rotationsachse rotierbar gelagert sind. Die Rotationsachse fällt mit einer Mittelachse der Abtriebswelle **12** zusammen. Der Rotor der ersten elektrischen Maschine **4** ist drehmomentenfest mit der Abtriebswelle **12** verbunden, sodass der Rotor stets in derselben Weise rotiert wie die Abtriebswelle **12**. Der Rotor der zweiten elektrischen Maschine **5** ist demgegenüber an der Abtriebswelle **12** mittels eines Kugellagers **24** gelagert, sodass der Rotor unabhängig von der Abtriebswelle **12** rotieren kann. Anders ausgedrückt ist kein unmittelbarer Übertrag eines Drehmoments von der Abtriebswelle **12** auf den Rotor der zweiten elektrischen Maschine **5** oder umgekehrt möglich. In vergleichbarer Weise ist auch das Schwungmassenrad des Energiespeichers **6** mittels eines Kugellagers **24** auf der Abtriebswelle **12** gelagert.

An einem feststehenden Gehäuse **25** des elektrischen Systems **13** sind korrespondierend zu den Rotoren der beiden elektrischen Maschinen **4**, **5** Statorwicklungen **21** angeordnet. Die elektrischen Maschinen **4**, **5** sind hier als Synchronmaschinen ausgeführt. Als solche sind sie besonders gut sowohl in Funktion eines Generators als auch in umgekehrter Funktion eines Elektromotors nutzbar.

Die beiden elektrischen Maschinen **4**, **5** und der Energiespeicher **6** sind in dem gezeigten Beispiel in Reihe geschaltet, wobei die beiden elektrischen Maschinen **4**, **5** mittels eines ersten Kupplungsmittels **8** und die zweite elektrische Maschine **5** und der Energiespeicher mittels eines zweiten Kupplungsmittels **9** miteinander koppelbar sind. Eine unmittelbare Kopplung des Energiespeichers **6** mit der ersten elektrischen Maschine **4** ist nicht möglich.

In der in **Figur 3** dargestellten Betriebsmodus ist das zweite Kupplungämittel **9** geschlossen und das erste Kupplungsmittel **8** geöffnet. Da die erste elektrische Maschine **4** drehmomentenfest mit der Abtriebswelle **12** verbunden ist, entspricht die Drehzahl des Rotors der ersten elektrischen Maschine **4** in jedem Fall der Drehzahl der Abtriebswelle **12**. In dem dargestellten Betriebsmodus kann das elektrische System **13** beispielsweise Hybridfunktionen wahrnehmen, sodass sich die landwirtschaftliche Arbeitsmaschine **1** in ihren Hybridbetrieb befindet. Hierbei wird in einem ersten Untermodus in dem Energiespeicher **6** gespeicherte Rotationsenergie mittels des zweiten Kupplungsmittels **9** auf die zweite elektrische Maschine **5** übertragen, deren Rotor folglich angetrieben wird. Mittels Umwandlung der mechanischen Rotationsenergie in elektrische Energie wirkt die zweite elektrische Maschine **5** sodann als Generator und erzeugt elektrischen Strom. Dieser wird wiederum dazu verwendet, den Rotor der ersten elektrischen Maschine **4** anzutreiben. Mit anderen Worten wird die erste elektrische Maschine **4** dazu genutzt, die elektrische Energie in mechanische Energie umzuwandeln. Sie fungiert mithin als Elektromotor. Das auf diese Weise mittels der ersten elektrischen Maschine **4** erzeugte Drehmoment wird auf die Abtriebswelle **12** übertragen und auf diese Weise zur Unterstützung der Verbrennungskraftmaschine **2** genutzt. Ein solcher Hybridbetrieb der Arbeitsmaschine **1** kann insbesondere dann genutzt werden, wenn letztere ohne externe Verbraucher **14** oder mit einem externen Verbraucher **14** mit lediglich geringem elektrischen Leistungsbedarf betrieben wird.

In einem zweiten Untermodus des Hybridbetriebs wird die erste elektrische Maschine **4** hingegen in Funktion eines Generators genutzt, das heißt mittels der Abtriebswelle **12** in den Rotor eingetragene mechanische Energie in elektrische Energie umgewandelt. Mithin dient die erste elektrische Maschine **4** in diesem Untermodus dazu, elektrische Verbraucher mit elektrischem Strom zu versorgen. Etwaige überschüssige elektrische Energie kann sodann dazu genutzt werden, die zweite elektrische Maschine **5** anzutreiben, wobei diese die Funktion eines Elektromotors ausübt. Aufgrund der Kupplung der zweiten elektrischen Maschine **5** mit dem Energiespeicher **6** wird auf diese Weise das Schwungmassenrad beschleunigt und somit schließlich die überschüssige elektrische Energie der ersten elektrischen Maschine in umgewandelter Form als mechanische (Rotations-)Energie gespeichert.

In einem alternativen Betriebsmodus, der in **Figur 3** nicht dargestellt ist, ist das erste Kupplungsmittel **8** geschlossen und das zweite Kupplungsmittel **9** geöffnet. Dies führt dazu, dass beide elektrischen Maschinen **4**, **5** mit derselben Drehzahl betrieben werden. In dieser Konfiguration wirken insbesondere beide elektrische Maschinen **4**, **5** als Generatoren und sind dazu geeignet, selbst größere externe Verbraucher **14**, die insbesondere bei leistungsfähigen Vorsatzgeräten zum Einsatz kommen, zuverlässig mit elektrischem Strom zu versorgen. Bei Vorliegen in diesem Betriebsmodus des elektrischen Systems 13 befindet sich die Arbeitsmaschine **1** in ihrem Arbeitsbetrieb.

Die optionale Zuschaltbarkeit der zweiten elektrischen Maschine **5** zur Versorgung großer Verbraucher bietet den besonderen Vorteil, dass das elektrische System **13** als solches der jeweiligen Belastungssituation angepasst werden kann. Somit kann die erste elektrische Maschine **4** insbesondere kleinere externe Verbraucher in aller Regel alleine versorgen, wobei eine Auslastung der ersten elektrischen Maschine **4** vergleichsweise groß ist. Die zweite elektrische Maschine **5** wird derweil nicht als Generator eingesetzt, da dies nicht notwendig ist. Durch die größere Auslastung der ersten elektrischen Maschine **4** erhöht sich auch deren Wirkungsgrad. Gleichzeitig wird mittels der zweiten elektrischen Maschine **5** eine Leistungsreserve vorgehalten, die den Betrieb großer externer Verbraucher **14** erlaubt. Im Übrigen wird die zweite elektrische Maschine **5** besonders vorteilhaft entweder zur Speicherung von Energie oder zur Versorgung der ersten elektrischen Maschine **4** mit elektrischem Strom genutzt werden. Die Kontrolle über die Art der Nutzung des elektrischen Systems **13** wird mittels der vorstehend genannten Steuerung **20** vorgenommen, die je nach Betriebsmodus der Arbeitsmaschine **1** die Schaltung der Kupplungsmittel **8**, **9** steuert.

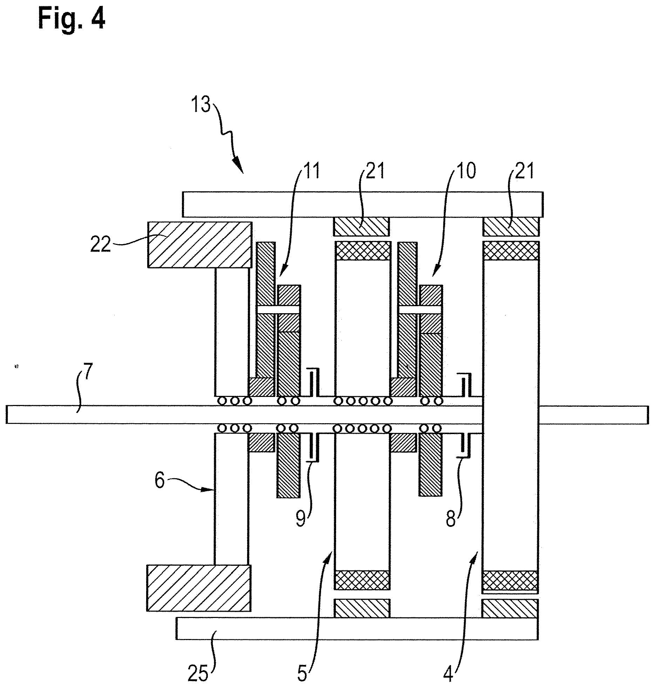

Eine alternative Ausgestaltung des elektrischen Systems **13** ist in **Figur 4** dargestellt. Das dortige elektrische System **13** unterscheidet sich von dem vorstehend beschriebenen durch zwei Übersetzungsstufen **10**, **11**. Eine erste Übersetzungsstufe **10** ist zwischen den beiden elektrischen Maschinen **4**, **5** und die zweite Übersetzungsstufe **11** zwischen der zweiten elektrischen Maschine **5** und dem Energiespeicher **6** angeordnet. Rein beispielhaft sind hier beide Übersetzungsstufen **10**, **11** sind mit demselben Übersetzungsverhältnis von n = 3 ausgelegt. Selbstverständlich ist es ebenso denkbar, die beiden Übersetzungsstufen **10**, **11** mit voneinander abweichenden Übersetzungsverhältnissen auszuführen. Ferner ist es denkbar, lediglich eine Übersetzungsstufe vorzusehen und die jeweilige andere Verbindung ohne Übersetzung auszuführen.

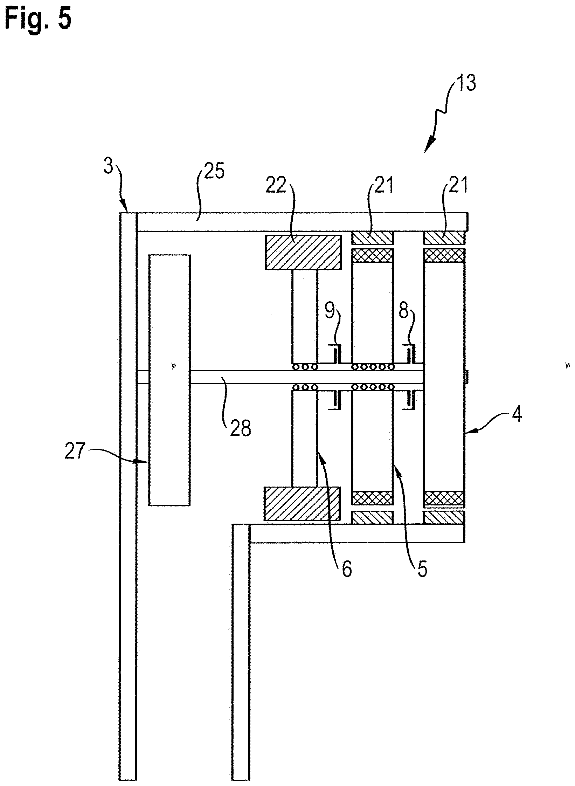

Eine weitere Alternative ergibt sich anhand der Darstellung gemäß **Figur 5**. Bei der dort gezeigten Ausführungsform ist das elektrische System **13** in eine Getriebeeinrichtung **3** in Form eines Pumpenverteilergetriebes integriert. In der Getriebeeinrichtung **3** ist eine gesonderte Abtriebswelle **28** vorgesehen, die mittels eines Antriebsrads **27** antreibbar ist. Das elektrische System **13** ist im Übrigen gleichartig zu dem gemäß **Figur 3** ausgeführt.

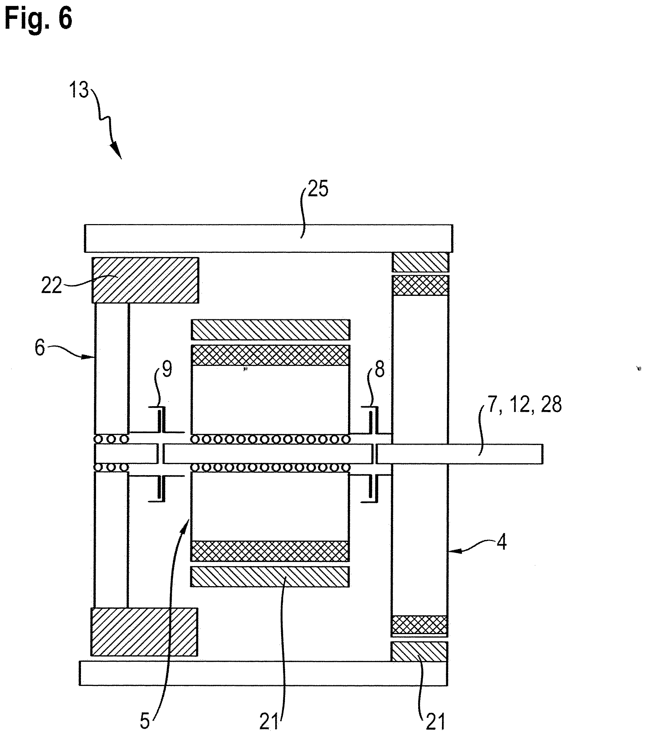

Eine abweichende Ausgestaltungsmöglichkeit für das elektrische System **13** ergibt sich weiterhin anhand der Darstellung gemäß **Figur 6**. In dem dort gezeigten Beispiel ist die zweite elektrische Maschine **5** nicht als Synchronmaschine, sondern als polumschaltbare Asynchronmaschine ausgebildet. In dieser Ausführung kann die zweite elektrische Maschine insbesondere unter Ausnutzung der Polumschaltung in verschiedenen Drehzahlbereichen effizient genutzt werden.

### Bezugszeichenliste

- 1: Arbeitsmaschine
- 2: Verbrennungskraftmaschine
- 3: Getriebeeinrichtung
- 4: erste elektrische Maschine
- 5: zweite elektrische Maschine
- 6: Energiespeicher
- 7: kraftmaschinenseitige Abtriebswelle
- 8: Kupplungsmittel
- 9: Kupplungsmittel
- 10: Übersetzungsstufe
- 11: Übersetzungsstufe
- 12: verbraucherseitige Abtriebswelle
- 13 ,: elektrisches System
- 14: externer Verbraucher
- 15: Häckselorgan
- 16: Beschleunigungsorgan
- 17: Erntegut
- 18: Riemen
- 19: Abtriebswelle
- 20: Regelung
- 21: Statorwicklung
- 22: Masse
- 23: Rad
- 24: Kugellager
- 25: Gehäuse
- 26: elektrische Leitung
- 27: Antriebsrad
- 28: Getriebewelle
- 29: Auswurforgan

## Patentansprüche

1. Elektrisches System (13) zur Verwendung in oder mit einer landwirtschaftlichen Arbeitsmaschine (1), umfassend
- eine elektrische Maschine (4), die mit einer Abtriebswelle (7, 12, 28) der landwirtschaftlichen Arbeitsmaschine (1) koppelbar ist,
- einen Energiespeicher (6), der zumindest mittelbar mit der elektrischen Maschine (4) koppelbar ist,
**gekennzeichnet durch**
eine zweite elektrische Maschine (5), die mit der ersten elektrischen Maschine (4) und dem Energiespeicher (6) zusammenwirken kann,
wobei die zweite elektrische Maschine (5) mittels eines Kupplungsmittels (8) zumindest mittelbar mit der ersten elektrischen Maschine (4) in Drehmoment übertragender Weise verbindbar ist, und wobei die erste elektrische Maschine (4), die zweite elektrische Maschine (5) und der Energiespeicher (6) in Reihe geschaltet sind, wobei die erste elektrische Maschine (4) mittels eines ersten Kupplungsmittels (8) mit der zweiten elektrischen Maschine (5) in Drehmoment übertragender Weise koppelbar ist und die zweite elektrische Maschine (5) mittels eines zweiten Kupplungsmittels (9) in Drehmoment übertragender Weise, mit dem Energiespeicher (6) koppelbar ist.

2. Elektrisches System (13) nach Anspruch 1, **dadurch gekennzeichnet, dass** das elektrische System (13) in Form eines externen Aggregats ausgeführt ist, das mit einem Zapfwelleneingang umfasst, mittels dessen das Aggregat an eine Zapfwelle einer landwirtschaftlichen Arbeitsmaschine (1) in Drehmoment übertragender Weise anschließbar ist.

3. Landwirtschaftliche Arbeitsmaschine (1) mit einem elektrischen System nach einem der vorhergehenden Ansprüche, insbesondere ein Mähdrescher, Feldhäcksler oder Traktor, umfassend
- eine Verbrennungskraftmaschine (2),
- eine Getriebeeinrichtung (3) sowie
- ein elektrisches System (13),
das elektrische System (13) umfassend
- eine elektrische Maschine (4) sowie
- einen Energiespeicher (6),
wobei ein mittels der Verbrennungskraftmaschine (2) erzeugtes Drehmoment mittels einer kraftmaschinenseitigen Abtriebswelle (7) an die Getriebeeinrichtung (3) übertragbar ist,
wobei die elektrische Maschine (4) zumindest mittelbar mittels der Verbrennungskraftmaschine (2) antreibbar ist, sodass die elektrische Maschine (4) zumindest zeitweise mittels Antriebs über die Verbrennungskraftmaschine (2) in Funktion eines Generators wirken kann.

4. Arbeitsmaschine (1) nach Anspruch 3, **dadurch gekennzeichnet, dass** der Energiespeicher (6) von einem Schwungmassenspeicher gebildet ist.

5. Arbeitsmaschine (1) nach Anspruch 3 oder 4, **gekennzeichnet durch** eine zwischen der ersten elektrischen Maschine (4) und der zweiten elektrischen Maschine (5) ausgebildete Übersetzungsstufe (10), mittels derer eine Drehzahl der ersten elektrischen Maschine (4) auf eine demgegenüber erhöhte Drehzahl der zweiten elektrischen Maschine (5) übersetzbar ist.

6. Arbeitsmaschine (1) nach einem er Ansprüche 3 bis 5, **dadurch gekennzeichnet, dass** die die beiden elektrischen Maschinen (4, 5) und der Energiespeicher in Reihe geschaltet sind, wobei die erste elektrische Maschine (4) mittels eines ersten Kupplungsmittels (8) mit der zweiten elektrischen Maschine (5) und die zweite elektrische Maschine (5) mittels eines zweiten Kupplungsmittels (9) mit dem Energiespeicher (6) verbindbar sind.

7. Arbeitsmaschine (1) nach Anspruch 4 und 6, **gekennzeichnet durch** eine zwischen der zweiten elektrischen Maschine (5) und dem Energiespeicher (6) ausgebildete Übersetzungsstufe (11), mittels derer eine Drehzahl der zweiten elektrischen Maschine (5) hin zu einer demgegenüber erhöhten Drehzahl des Energiespeichers (6) übersetzbar ist.

8. Arbeitsmaschine (1) nach einem er Ansprüche 3 bis 7, **dadurch gekennzeichnet, dass** die erste elektrische Maschine (4) unmittelbar mit der kraftmaschinenseitigen Abtriebswelle (7) der Verbrennungskraftmaschine (2) zusammenwirkt, wobei vorzugsweise eine Drehmoment übertragende Verbindung zwischen der ersten elektrischen Maschine (4) und der Abtriebswelle (7) fest ausgebildet ist.

9. Arbeitsmaschine (1) nach einem er Ansprüche 3 bis 7, **dadurch gekennzeichnet, dass** die erste elektrische Maschine (4) mit einer verbraucherseitigen Abtriebswelle (12) der Getriebeeinrichtung (3) zusammenwirkt, wobei vorzugsweise eine Drehmoment übertragende Verbindung zwischen der ersten elektrischen Maschine (4) und der Abtriebswelle (12) fest ausgebildet ist.

10. Arbeitsmaschine (1) nach Anspruch 9, **dadurch gekennzeichnet, dass** das elektrische System (13) mit einer eigens zugeordneten Getriebewelle (28) zusammenwirkt, wobei vorzugsweise eine Drehmoment übertragende Verbindung zwischen der ersten elektrischen Maschine (4) und der Getriebewelle (28) fest ausgebildet ist.

11. Arbeitsmaschine (1) nach einem er Ansprüche 3 bis 10, **dadurch gekennzeichnet, dass** die zweite elektrische Maschine (5) von einer Asynchronmaschine, insbesondere einer polumschaltbaren Asynchronmaschine, gebildet ist.

## Claims

1. An electrical system (13) for use in or with an agricultural working machine (1), comprising
- an electric motor (4) which can be coupled to an output shaft (7, 12, 28) of the agricultural working machine (1),
an energy storage device (6) which can be at least indirectly coupled to the electric motor (4),
**characterized by**
a second electric motor (5) which can cooperate with the first electric motor (4) and the energy storage device (6),
wherein the second electric motor (5) can be at least indirectly connected to the first electric motor (4) in a torque-transmitting manner by means of a clutch means (8), and wherein the first electric motor (4), the second electric motor (5) and the energy storage device (6) are connected in series, wherein the first electric motor (4) can be coupled to the second electric motor (5) in a torque-transmitting manner by means of a first clutch means (8) and the second electric motor (5) can be coupled to the energy storage device (6) in a torque-transmitting manner by means of a second clutch means (9).

2. The electrical system (13) according to claim 1, **characterized in that** the electrical system (13) is in the form of an external unit which comprises a power take-off shaft input by means of which the unit can be connected to a power take-off shaft of an agricultural working machine (1) in a torque-transmitting manner.

3. An agricultural working machine (1) with an electrical system according to one of the preceding claims, in particular a combine harvester, forage harvester or tractor, comprising
- an internal combustion engine (2),
- a transmission device (3), as well as
- an electrical system (13),
the electrical system (13) comprising
- an electric motor (4) as well as
- an energy storage device (6),
wherein a torque produced by the internal combustion engine (2) can be transmitted to the transmission device (3) by means of an output shaft (7) on the internal combustion engine side,
wherein the electric motor (4) can be driven at least indirectly by means of the internal combustion engine (2), so that the electric motor (4) can operate at least periodically by being driven via the internal combustion engine (2) functioning as a generator.

4. The working machine (1) according to claim 3, **characterized in that** the energy storage device (6) is formed by a flywheel mass storage device.

5. The working machine (1) according to claim 3 or claim 4, **characterized by** a gear stage (10) formed between the first electric motor (4) and the second electric motor (5), by means of which a rotational speed of the first electric motor (4) can be stepped up to a relatively higher rotational speed of the second electric motor (5).

6. The working machine (1) according to one of claims 3 to 5, **characterized in that** the two electric motors (4, 5) and the energy storage device are connected in series, wherein the first electric motor (4) can be connected to the second electric motor (5) by means of a first clutch means (8) and the second electric motor (5) can be connected to the energy storage device (6) by means of a second clutch means (9).

7. The working machine (1) according to claim 4 and claim 6, **characterized by** a gear stage (11) formed between the second electric motor (5) and the energy storage device (6), by means of which a rotational speed of the second electric motor (5) can be stepped up to a relatively higher rotational speed of the energy storage device (6).

8. The working machine (1) according to one of claims 3 to 7, **characterized in that** the first electric motor (4) cooperates indirectly with the output shaft (7) of the internal combustion engine (2) on the combustion engine side, wherein preferably, a fixed torque-transmitting connection is formed between the first electric motor (4) and the output shaft (7).

9. The working machine (1) according to one of claims 3 to 7, **characterized in that** the first electric motor (4) cooperates with an output shaft (12) of the transmission device (3) on the consumption side, wherein preferably, a fixed torque-transmitting connection is formed between the first electric motor (4) and the output shaft (12).

10. The working machine (1) according to claim 9, **characterized in that** the electrical system (13) cooperates with a separate associated transmission shaft (28), wherein preferably, a fixed torque-transmitting connection is formed between the first electric motor (4) and the transmission shaft (28).

11. The working machine (1) according to one of claims 3 to 10, **characterized in that** the second electric motor (5) is formed by an asynchronous motor, in particular a pole-changing asynchronous motor.

## Revendications

1. Système électrique (13) à employer dans ou avec une machine de travail agricole (1), incluant
- une machine électrique (4) qui est couplable à un arbre de sortie (7, 12, 28) de la machine de travail agricole (1),
- un accumulateur d'énergie (6) qui est couplable au moins indirectement à la machine électrique (4),
**caractérisé par**
une deuxième machine électrique (5) qui peut coopérer avec la première machine électrique (4) et avec l'accumulateur d'énergie (6),
la deuxième machine électrique (5) étant reliable, à l'aide d'un moyen de couplage (8) au moins indirectement à la première machine électrique (4) de manière à transmettre un moment de rotation, et la première machine électrique (4), la deuxième machine électrique (5) et l'accumulateur d'énergie (6) étant montés en série, la première machine électrique (4) étant reliable à l'aide d'un premier moyen de couplage (8) à la deuxième machine électrique (5) de manière à transmettre un moment de rotation, et la deuxième machine électrique (5) étant couplable à l'aide d'un deuxième moyen de couplage (9) à l'accumulateur d'énergie (6) à l'aide d'un deuxième moyen de couplage (9) de manière à transmettre un moment de rotation.

2. Système électrique (13) selon la revendication 1, **caractérisé en ce que** le système électrique (13) est conçu en forme d'organe externe qui inclut une entrée de prise de force à l'aide de laquelle l'organe est reliable à une prise de force d'une machine de travail agricole (1) de manière à transmettre un moment de rotation.

3. Machine de travail agricole (1) comprenant un système électrique selon une des revendications précédentes, en particulier une moissonneusebatteuse, ensileuse ou tracteur, incluant
- une machine à combustion interne (2),
- un équipement de transmission (3) ainsi que
- un système électrique (13),
le système électrique (13) incluant
- une machine électrique (4) ainsi que
- un accumulateur d'énergie (6),
un moment de rotation produit au moyen de la machine à combustion interne (2) étant transmissible à l'équipement de transmission (3) au moyen d'un arbre de sortie côté machine à combustion interne (7),
la machine électrique (4) étant entraînable au moins indirectement au moyen de la machine à combustion interne (2), de sorte que la machine électrique (4) peut faire fonction de générateur au moins en partie au moyen d'un entraînement par l'intermédiaire de la machine à combustion interne (2).

4. Machine de travail (1) selon la revendication 3, **caractérisée en ce que** l'accumulateur d'énergie (6) est formé par un accumulateur à masse d'inertie.

5. Machine de travail (1) selon la revendication 3 ou 4, **caractérisée par** un étage de multiplication (10) qui est conçu entre la première machine électrique (4) et la deuxième machine électrique (5) et à l'aide duquel une vitesse de rotation de la première machine électrique (4) peut être portée à une vitesse de rotation comparativement supérieure de la deuxième machine électrique (5).

6. Machine de travail (1) selon une des revendications 3 à 5, **caractérisée en ce que** les deux machines électriques (4, 5) et l'accumulateur d'énergie sont montés en série, la première machine électrique (4) étant reliable à l'aide d'un premier moyen de couplage (8) à la deuxième machine électrique (5) et la deuxième machine électrique (5) étant reliable à l'aide d'un deuxième moyen de couplage (9) à l'accumulateur d'énergie (6).

7. Machine de travail (1) selon la revendication 4 et 6, **caractérisée par** un étage de multiplication (11) qui est conçu entre la deuxième machine électrique (5) et l'accumulateur d'énergie (6) et à l'aide duquel une vitesse de rotation de la deuxième machine électrique (5) peut être portée à une vitesse de rotation comparativement supérieure de l'accumulateur d'énergie (6).

8. Machine de travail (1) selon une des revendications 3 à 7, **caractérisée en ce que** la première machine électrique (4) coopère directement avec l'arbre de sortie côté machine à combustion interne (7) de la machine à combustion interne (2), préférentiellement une liaison transmettrice de moment de rotation étant établie à demeure entre la première machine électrique (4) et l'arbre de sortie (7).

9. Machine de travail (1) selon une des revendications 3 à 7, **caractérisée en ce que** la première machine électrique (4) coopère avec un arbre de sortie côté utilisateur (12) de l'équipement de transmission (3), préférentiellement une liaison transmettrice de moment de rotation étant établie à demeure entre la première machine électrique (4) et l'arbre de sortie (12).

10. Machine de travail (1) selon la revendication 9, **caractérisée en ce que** le système électrique (13) coopère avec un arbre de transmission spécifiquement associé (28), préférentiellement une liaison transmettrice de moment de rotation étant établie à demeure entre la première machine électrique (4) et l'arbre de transmission (28).

11. Machine de travail (1) selon une des revendications 3 à 10, **caractérisée en ce que** la deuxième machine électrique (5) est formée par une machine asynchrone, en particulier par une machine asynchrone à commutation de polarité.
